# EUROPEAN PATENT APPLICATION

(11) **EP 4 085 767 A1**
(43) Date of publication of application: **09.11.2022**
(21) Application number: 22171555.0
(22) Date of filing: 04.05.2022
(51) Int. Cl.: A23F 3/10

(54) **PROCESS FOR INCREASING THE INTESTINAL BIOVAILABILITY OF POLYPHENOLS IN A PLANT FOOD MATRIX WITH A HIGH POLYPHENOL CONTENT**

(30) Priority: 07.05.2021 IT 202100011798
(71) Applicant: NGN Healthcare - New Generation Nutraceuticals S.r.l., 83013 Mercogliano (IT)
(72) Inventor: NOVELLINO, Ettore, 83100 Avellino (IT); TENORE, Gian Carlo, 80128 Napoli (IT)
(74) Representative: Valenza, Silvia

(57) **Abstract**

The present invention describes a process for the production of a polyphenol-rich, highly intestinal bioavailability freeze-dried product (BioTech) from a polyphenol-rich plant matrix, preferably PGI Annurca Campana apples, subjected to incubation with a food-grade chemical/enzymatic treatment to promote pectin degradation. The subject of the invention is also a food/nutraceutical supplement comprising the BioTech freeze-dried product and its use as an antioxidant, anti-inflammatory and lipid-lowering agent.

## Description

### FIELD OF THE INVENTION

The present invention relates to the field of food supplements, in particular food supplements that are sources of polyphenols with high intestinal bioavailability and the related manufacturing process.

### BACKGROUND

Polyphenols are an important class of biologically active natural substances found throughout the plant world, particularly in fruit and vegetables, which are the main dietary sources of these compounds with potential health benefits. These are substances characterized by high antioxidant capacity, whose anti-radical activity promotes anti-inflammatory and anti-carcinogenic effects, with potential capacity to protect against the development of various lifestyle-related chronic diseases, such as cardiovascular diseases and diabetes.

Located within the vacuole of the plant cell, polyphenols are encapsulated by the plant cell wall (PCW). Cellulose and pectin are the key constituents of the PCW of fruit and vegetables: cellulose is responsible for the rigidity of the PCW, while pectin imparts flexibility. It has been shown that most polyphenols in the plant cell establish interactions, both weak and covalent, with the cellulose-pectin matrix of the PCW. Studies conducted on the interactions between apple procyanidins and the PCW of constituent cells revealed a dense network of bonds of these polyphenols with both the hydrophobic and hydrophilic regions of the cellulose and pectin portions of the PCW. When plant cells break, either during domestic or industrial processing, or during direct oral chewing of fruit and vegetables, the cytoplasmic membranes and PCW fracture, allowing the cell content, including polyphenols, to be released. However, during the exit from the cell, polyphenols and PCWs may come into contact, to establish further bonds that help to thicken the network of interactions between their respective components.

From these considerations, it follows that, although fruit and vegetables are a rich source of polyphenols, interactions between them and the PCW can affect, even significantly, their intestinal bioavailability (i.e. the amount of polyphenols released from the food matrix, for absorption and entry into circulation), thus limiting the potential positive health impact that fruit and vegetables have always boasted in our diet. Similarly, a chemical solvent extraction of the polyphenol complex from the plant matrix may not be exhaustive. In fact, this procedure is generally preceded by grinding the sample, which apparently does not promote the release of polyphenols. This is followed by extraction with "food-grade" solvents, which, according to regulations, consist of water and/or ethanol. However, water would cause gelling and swelling of the pectin structure, with retention of the polyphenol complex, while ethanol would induce stiffening and precipitation, resulting in sequestration of the polyphenols bound to it.

Pectin in cell walls is found in two basic forms: soluble pectin (pectin) and insoluble pectin (protopectin), where the latter is a complex of cellulose with pectin. During the hydrolytic treatment of plant matrices in the presence of catalysts, protopectin undergoes destruction, whereas cellulose is less susceptible to degradation (Pastukh et al., Scientific Researches of NUFT 2013, pp. 109-114). Hydrolysis of protopectin is carried out using catalysts of various types: alkalis (sodium and potassium hydroxide), mineral acids (sulphuric, hydrochloric, nitric, phosphoric), organic acids (oxalic, acetic), their various combinations and concentrations (Pastukh et al, 2013; Il'ina, 2001, Nauchnye osnovy tehnologii modificirovannyh pektinov, HKSAR, Krasnodar), enzymes (cellulase, matserase, pectinase). Protopectin is extracted from plant matter in two steps. During the first step - in aqueous solutions of mineral or organic acids, protopectin is hydrolysed into soluble pectin. During the second step, soluble pectin molecules are brought into the extraction solution. Interestingly, along with the conversion reaction into soluble pectin and extraction of protopectin, a series of partial hydrolysis of most polymeric pectin chains occurs, with the formation of lower molecular weight hydrolysis products.

Various types of enzymes with hydrolytic activity can degrade the pectin of plant matrices. In this respect, there are enzyme preparations on the market that are used in food technology to promote the degradation of plant pectin and make the polyphenols available for mechanical and/or chemical extraction. One example is polygalacturonases (PG), pectinesterases that degrade pectin. PGs hydrolyse the O-glycosidic bonds in the pectin's network of polygalacturonans, releasing alpha-1,4-polygalacturonic acid residues, resulting in the shortening of pectin chains (Pressey et al. Plant Science 1989, 59 (1): 57-62).

The aim of the present invention is to provide a method to produce, from a polyphenol-rich plant matrix, a freeze-dried product with a polyphenol content characterized by high intestinal bioavailability that is useful for the formulation of food supplements.

### SUMMARY OF THE INVENTION

Surprisingly, it has been shown that it is possible to increase the intestinal bioavailability of polyphenols from plant matrices by incubating them with a food-grade chemical/enzymatic treatment to promote pectin degradation. Therefore, the subject matter of this patent application is a process according to claim 1 to increase the bioavailability of polyphenols of a polyphenol-rich plant matrix.

The subject matter of the invention is also a freeze-dried product (BioTech) according to claim 5 obtained from the process of the invention, characterized by polyphenols with increased intestinal bioavailability.

The subject of this application is also a gastro-resistant pharmaceutical/nutraceutical composition comprising the above-mentioned freeze-dried product (BioTech).

The nutraceutical composition covered by the present invention is useful for exerting antioxidant, anti-inflammatory and lipid-lowering effects at systemic level.

### DETAILED DESCRIPTION OF THE INVENTION

For the purposes of the present invention, any fruit or vegetable known to be rich in polyphenols may be used as a polyphenol-rich plant food matrix, said matrix in the form of a freeze-dried product (Lio); preferably a freeze-dried product of the Annurca apple from Campania PGI (*Malus pumila* Miller). The freeze-dried product is preferably obtained by subjecting the plant matrix to an industrial freeze-drying process.

According to a preferred embodiment of the invention, freeze-dried annurca apples (LioMel) undergo a food-grade chemical/enzymatic treatment to degrade the constituent pectins. In particular, LioMel is treated with an acidic solution for acetic acid, preferably 10%. The aqueous mixture is incubated at a temperature of 25-30 °C under agitation for 0.5-3 hours, preferably 1.5 hours. The mixture is then fortified with an industrial enzyme mix based on polygalacturonase and incubated at a temperature of 25-30°C under agitation for 0.5-3 hours, preferably 1.5 hours. Then, the mixture is frozen and freeze-dried, resulting in a powder (BioTechMel). An aliquot of LioMel and BioTechMel, both in gastroprotected formulation, are individually subjected to a simulated gastrointestinal digestion process, which includes the three main human digestive steps: salivary, gastric and intestinal. On HPLC-MS analysis of intestinal digests, BioTechMel shows up to 4 times higher duodenal bioavailability of constituent polyphenols with respect to LioMel.

Preferably, a composition according to the invention comprises:

| | |
|---|---|
| BioTech | 75 - 80% |

Excipients (preferably silicon dioxide, maize starch, microcrystalline cellulose, calcium phosphate, talc, aluminium silicate) q.s. to 100 %
wherein the percentages are in weight calculated with respect to the total weight of the composition.

The composition, according to the invention, is obtained by simply mixing the components in the required amounts with ordinary mixers.

The composition will normally be formulated in powders, capsules, tablets, using known techniques (encapsulation, compression, controlled release, microgranules, nanocapsules, multilayer) as described in the pharmacopoeia for the preparation of gastro-resistant pharmaceutical formulations for oral use.

A particular example of a pharmaceutical formulation according to the invention comprises gastro-resistant capsules, containing:
200 - 600 mg of BioTech, preferably 500 mg;

A particular example of a pharmaceutical formulation according to the invention is a gastro-resistant capsule and/or tablet comprising:
BioTech, 500 mg; capsule or tablet constituents (titanium dioxide 1.9%; gellan gum 5.0%; hydroxypropyl methyl cellulose q.s. to 100%); tablet coating (oxy-propyl ethyl cellulose, PEG and derivatives, PVP, phenyl salicylate, modified starch, talc, glycerol, shellac).

The present invention can be better understood in light of the following embodiments.

### BRIEF DESCRIPTION OF THE FIGURES

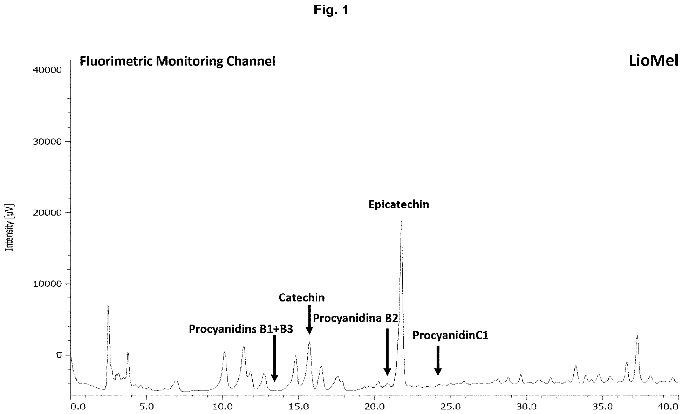

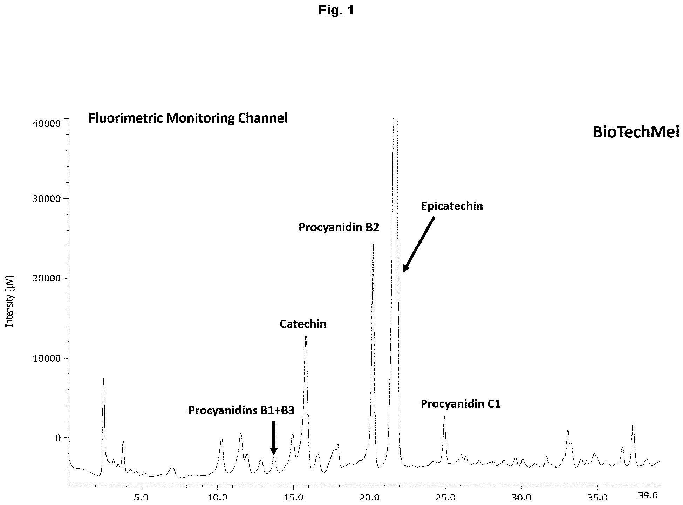

FIG. 1 shows HPLC-FLD tracking of polyphenol extracts of LioMel vs BioTechMel samples according to the present invention and shows the increase in polyphenol content after treatment of the LioMel sample with the method of the invention.

### EXPERIMENTAL PART

### EXAMPLE 1 - Preparation of BioTechMel

Apples of the Annurche Campane PGI variety are industrially freeze-dried. The resulting powder (LioMel) is incubated with a food-grade chemical/enzymatic treatment to promote the degradation of pectin. Specifically, LioMel (500 mg) is treated with 20 mL of distilled water at pH 2.5-4.0, preferably 2.9 for 10% acetic acid. The aqueous mixture is incubated at a temperature of 25°C under agitation at 600 rpm using a ThermoMixer system for 1.5 hours. Subsequently, the mixture is fortified with an aliquot of 0.5-2 mL of an industrial enzyme mix (Endozym^{®}, enzyme kit line, AEB SpA), made up as follows: Pectinlyase (PL), 10000-50000 U/g, preferably 30000 U/g; Pectinesterase (PE), 500-4000 U/g, preferably 2000 U/g; Polygalacturonase (PG), 3000-7000 U/g, preferably 5500 U/g; Cellulase (CMC), 200-600 U/g, preferably 450 U/g. The aqueous mixture is incubated at a temperature of 25°C under agitation at 600 rpm using a ThermoMixer system for 1.5 hours. Then, the mixture is frozen and freeze-dried, resulting in a powder (BioTechMel).

### EXAMPLE 2 - Preparation of gastro-resistant capsules

500 mg gastro-resistant capsules were chosen, the heads and bodies of which consisted of titanium dioxide 1.9%, gellan gum 5.0%, hypromellose q.b. at 100%. Two types of gastro-resistant capsules were formulated, containing: LioMel 500 mg and excipients; BioTechMel and excipients. The excipients were: silicon dioxide 5 mg, maize starch 50 mg, microcrystalline cellulose 30 mg, calcium phosphate 5 mg, talc 5 mg, aluminium silicate 5 mg.

### EXAMPLE 3 - In vitro data

To verify the duodenal bioavailability of the polyphenols contained in LioMel and BioTechMel, an experimental protocol simulating gastrointestinal digestion and trans-epithelial permeation was used. Specifically, one capsule of LioMel and one capsule of BioTechMel were individually mixed with 6 mL of artificial saliva consisting of: KCI (89.6 g/L), KSCN (20 g/L), NaH₂PO4 (88.8 g/L), Na₂SO4 (57.0 g/L), NaCl (175.3 g/L), NaHCO₃ (84.7 g/L), urea (25.0 g/L) and 290 mg of α-amylase. The pH of the solution was adjusted to 6.8 with 0.1 M HCI. The mixture was introduced into a plastic bag containing 40 mL of water and homogenized in a Stomacher 80 Microbiomaster (Seward, Worthing, UK) for 3 min. Immediately, 0.5 g of pepsin (14,800 U) dissolved in 0.1 N HCI were added, the pH was adjusted to 2.0 with 6 M HCI, and incubated at 37 °C in a Polymax 1040 orbital shaker (250 rpm) (Heidolph, Schwabach, Germany) for 2 hrs. After gastric digestion, pancreatic digestion was simulated as follows: the pH was raised to 6.5 with 0.5 M NaHCO₃ and then, 5 mL of a mixture of pancreatin (8.0 mg/mL) and bile salts (50.0 mg/mL) (1:1; v/v) dissolved in 20 mL of water were added and incubated at 37 °C in an orbital shaker (250 rpm) for 2 hrs. The digested intestinal sample was freeze-dried and stored at -80 °C until further analysis. The duodenal digests of LioMel and BioTechMel were subjected to extraction of the polyphenolic content with a mixture of MeOH:H₂O 80-20 (1% HCOOH). The extracts were subjected to HPLC-DAD-FLD analysis and the chromatograms obtained were compared to assess the differences between the peak areas of each polyphenol profile (LioMel vs BioTechMel). Figure 1 shows a higher concentration of polyphenols in the intestinal digest of BioTechMel, demonstrating the increased duodenal bioavailability of BioTechMel polyphenols compared to LioMel. In particular, BioTechMel indicates an increase in the duodenal bioavailability of constituent polyphenols by up to 4 times those contained in LioMel.

### EXAMPLE 4 - Clinical data

### Protocol

Study participants were recruited by the Samnium Medica Cooperative (Benevento, Italy). The patients were enrolled in June 2019. Patients aged between 18 and 83 years were eligible for enrolment if they had the following serum cholesterol parameter values at baseline: TC, 200-260 mg/dL; HDL-C, 30-45 mg/dL; LDL-C, 189-206 mg/dL. The subjects were asked to keep their eating habits unchanged throughout the study.

Exclusion criteria were: smoking, obesity (BMI > 30 kg/m²), diabetes, liver disease, kidney disease, heart disease, family history of chronic disease, drug therapy or supplement intake for hypercholesterolemia, drug therapy or supplement intake containing apple polyphenols, intensive exercise (> 10 hours/week), pregnant women, women suspected of being pregnant, women hoping to become pregnant, breastfeeding, allergy to birch pollen, use of vitamin/mineral supplements two weeks prior to study entry and blood donation less than three months prior to the study. The subjects received oral and written information about the study before giving their written consent. The protocol, volunteers' letter of intent and study synopsis document were presented to the Scientific Ethics Committee of the AO Rummo Hospital (Benevento, Italy). The study was approved by the committee and carried out in accordance with the 1964 Declaration of Helsinki (revised in 2000). The subjects were asked to record the data in an intake control chart for the intervention study and the side effects in daily reports. The study was a single-centre, double-blind, placebo-controlled trial conducted at the Samnium Medica Cooperative (Benevento, Italy).

The duration of the study was 32 weeks: both the placebo and treatment groups had an 8-week run-in period; the placebo groups underwent 8 weeks of administration with capsules identical to the treatment containing only maltodextrins, while the treatment groups had 8 weeks of administration with the two types of nutraceuticals (LioMel and BioTechMel); both the placebo and treatment groups completed the trial with 8 weeks of follow-up. Both the tests and study treatment were performed on an outpatient basis. Clinical examinations and blood sampling were performed after 12 hours of fasting at weeks 0, 8, 16, 24 and 32. Subjects were instructed not to drink alcohol or engage in strenuous physical activity 48 hours prior to blood sampling. All blood samples were taken in the morning and immediately after measurement of heart rate and blood pressure. Blood samples were collected in 10 mL EDTA-coated tubes (Becton - Dickinson, Plymouth, UK) and plasma was isolated by centrifugation (20 min, 2,200 g, 4°C). All samples were stored at -80°C until analysis. Plasma levels of TC, HDL-C and LDL-C were determined using kits supplied by Diacron International (Grosseto, Italy). Analyses were performed on a Diacron International Free Carpe Diem and the intra-day and inter-day variations were 1.4 and 1.6% for TC, 1.6 and 2.2% for LDL-C and 2.0 and 2.3% for HDL-C, respectively. In addition to these four meetings, six standardized telephone interviews were carried out every 14 days from the first meeting to verify compliance and increase adherence to the protocol. In particular, these interviews reminded patients to complete their intake control chart for the intervention study and to record any treatment interruptions, or adverse events they may have experienced in the meantime (which were also routinely documented on case report forms during each telephone interview and clinical examination).

All patients underwent a standardized physical examination, evaluation of their medical history (up to five years prior to enrolment), laboratory test, measurement of blood pressure and heart rate, and evaluation of BMI. At each clinical examination, patients had to complete three self-administered questionnaires on aspects of quality of life and their diaries were checked for completeness of data and quality of documentation to ensure that the diary items were understood by the patient.

### Randomisation, concealment and blinding

A total of 150 patients were screened for eligibility; 70 patients (46.7%) failed the screening phase; 80 patients were randomized. Eligible patients were assigned to the placebo and treatment groups (4 groups of 20 patients each). The two nutraceuticals and the placebo were colour-coded and given in random order. The code was not broken until all analyses were completed and the results statistically analysed. If a patient dropped out before receiving the product, he/she was replaced by the next eligible patient enrolled at the same centre. Hidden allocation was performed by an internet-based randomisation programme, stratified by study site. The list of random numbers was generated by an investigator with no clinical involvement in the trial. The patients, doctors, main laboratories and study personnel (data analysts, statisticians) were blind to the treatment assignment.

### Treatments

Volunteers in the two treatment groups (20 patients each) were instructed to take two nutraceutical capsules per day (one at lunch and one at dinner). The nutraceutical product consisted of gastro-resistant capsules, each containing 500 mg of nutraceutical (LioMel or BioTechMel). The primary endpoints measured were changes in TC, HDL-C and LDL-C, while the secondary outcomes collected during the clinic examinations were measurements of blood pressure, heart rate and assessment of BMI. All unprocessed patient evaluations were blinded at the principal investigator's site. The decision-making process was performed according to a consent document (unpublished standard operating procedure), prior to unmasking, in order to define conclusive primary and secondary efficacy data from a clinical perspective.

### Power-analysis

For the proportion analysis, the effect size is estimated from the relative risk frequencies RR between the experimental groups (e.g. in the primary study, RR corresponds to the probability of receiving a drug treatment/probability of not receiving it). As no previous studies similar to this one were available, effect size estimates were conducted assuming the following scenarios:
- Risk in the placebo group: 99%, 90%, 80%
- Risk in nutraceutical groups: 70%, 50%, 30%

The RR values used to estimate the resulting sample size:

| | 99 % | 90 % | 80 % |
|---|---|---|---|
| 70 % | 1.41 | 1.28 | 1.14 |
| 50 % | 1.98 | 1.80 | 1.60 |
| 30 % | 3.30 | 3.00 | 2.67 |

This indicates that the sample size estimates explore situations where the risk of receiving drug treatment in nutraceutical-treated patients is approximately 1.1 to 3.3 times lower than in the control.

Sample size calculations were performed with three power 1-β values of 0.80, 0.95 and 0.99 and significance level α =0.05.

The following table shows the overall sample sizes for the different hypotheses formulated.

| **Risk in placebo groups** | **Risk in nutraceutical groups** | **RR (placebo/nutraceutical)** | **(1-β)= 0.99 α =0.05** | **(1-β)= 0.95 α =0.05** | **(1-β)= 0.80 α =0.05** |
|---|---|---|---|---|---|
| **99 %** | **30 %** | 3.30 | 30 | 24 | 18 |
| | **50 %** | 1.98 | 56 | 44 | 30 |
| | **70 %** | 1.41 | 118 | 88 | 60 |
| **90 %** | **30 %** | 3.00 | 46 | 36 | 26 |
| | **50 %** | 1.80 | 96 | 72 | 48 |
| | **70 %** | 1.28 | 304 | 222 | 144 |
| **80 %** | **30 %** | 2.67 | 70 | 54 | 36 |
| | **50 %** | 1.60 | 190 | **70** | 70 |
| | **70 %** | 1.14 | 1408 | 1008 | 626 |

Based on the above, it is considered that a reasonable number of patients could be 70.

### Statistics and methodology

During the process, it became evident that drop-outs and incomplete diary documentation generated missing data that could not be adequately handled by the robust comparison planned. To deal with the structure of missing data, a negative binomial, generalized linear mixed effects model (NB GLMM) was used, which not only provides unbiased parameter estimates in the case of "Missing at Random" (MAR) data, but also gives reasonably stable results when the MAR assumption is violated. Patients who did not provide diary data (inducing zero evaluable days) were excluded from the primary efficacy analysis based on MAR, according to an "all observed data approach" proposed by White and colleagues. This approach is statistically efficient without using multiple imputation techniques. Data retrieved after the withdrawal of the randomized trial treatment were also included in the analysis. Unless otherwise stated, all experimental results were expressed as the mean ± standard deviation (SD) of at least three replicates.

Statistical analysis of the data was performed by Student's t-test or two-way ANOVA, followed by the Tukey-Kramer multiple comparison test to assess significant differences between a pair of means. Statistical heterogeneity was assessed using the Cochran test (p < 0.1). The I2 statistic was also calculated, and I2>50% was considered as significant heterogeneity between the studies. If significant heterogeneity between the studies was demonstrated, a random-effects model was used. Otherwise, the results were obtained from a fixed-effects model. The percentage change of mean and DS values was excluded when determining DS values for an outcome. DS values were calculated from standard errors, 95% CI, p-value or t-value if they were not available directly. Subgroup analyses, defined above, were performed to examine possible sources of heterogeneity within these studies and included health status, study design, intervention type, duration, total dose and Jadad score. Treatment effects were analysed using PROC MIXED with treatment and period as fixed factors, subjects as random factors and baseline measurements as covariates, and defined as weighted mean differences and 95% CIs and calculated for net changes in the parameters assessed. Data that could not meet the criteria of homogeneity of variance (Levenes test) and normal distribution (determined by examination of the residual plot and the Shapiro-Wilks test) even after logarithmic transformation, were analysed by a non-parametric test (Friedman). The significance level (α value) was 95% in all cases (P < 0.05).

### Analysis sets

The entire analysis set included all randomized patients and patients who did not fail to meet a major entry criterion. Patients with no primary efficacy data were excluded from efficacy analyses. The protocol set consisted of all patients who did not deviate substantially from the protocol, and they had two characteristics: firstly, this group included patients for whom no major protocol violations (e.g. poor compliance, errors in treatment allocation) had been detected; secondly, they had to be on treatment for at least 50 days, starting on the day of first intake (completion of a certain pre-specified minimum exposure to the treatment regimen). Therefore, patients who prematurely discontinued the study or treatment were excluded from the protocol sample.

### Results

Table 1 shows the demographic and clinical characteristics assessed at the baseline visit of all randomized patients. Overall, about half of the randomized patients were female; the total age range was 18-83 years. The groups were well balanced in terms of demographic data and clinical factors.

| **Table 1.** Baseline characteristics of patients (n = 80) in the placebo and treatment groups. | | | |
|---|---|---|---|
| **Placebo *LioMel*** | | **Placebo *BioTechMel*** | |
| **Demographics** | n = 20 | **Demographics** | n = 20 |
| Age (years) | 38.7 ± 11.4 | Age (years) | 37.2 ± 12.5 |
| Male gender (No (%)) | 9 (46%) | Male gender (No (%)) | 9 (46%) |
| White ethnicity (No (%)) | 250 (100%) | White ethnicity (No (%)) | 250 (100%) |

| **Clinical parameters** | | **Clinical parameters** | |
|---|---|---|---|
| TC (mg/dL) | 236.9 ± 13.1 | TC (mg/dL) | 235.6 ± 13.9 |
| LDL-C (mg/dL) | 185.3 ± 11.4 | LDL-C (mg/dL) | 183.3 ± 12.1 |
| HDL-C (mg/dL) | 37.8 ± 8.5 | HDL-C (mg/dL) | 39.0 ± 8.0 |
| Glucose (mg/dL) | 107.2 ± 8.4 | Glucose (mg/dL) | 110.3 ± 9.5 |
| Triglycerides (mg/dL) | 98.0 ± 9.3 | Triglycerides (mg/dL) | 96.5 ± 7.4 |

| ***LioMel* treatment** | | ***BioTechMel* treatment** | |
|---|---|---|---|
| **Demographics** | n = 20 | **Demographics** | n = 20 |
| Age (years) | 36.1 ± 13.8 | Age (years) | 34.7 ± 12.4 |
| Male gender (No (%)) | 10 (50%) | Male gender (No (%)) | 11 (55%) |
| White ethnicity (No (%)) | 250 (100%) | White ethnicity (No (%)) | 250 (100%) |

| **Clinical parameters** | | **Clinical parameters** | |
|---|---|---|---|
| TC (mg/dL) | 233.6 ± 13.7 | TC (mg/dL) | 234.9 ± 13.1 |
| LDL-C (mg/dL) | 181.3 ± 12.3 | LDL-C (mg/dL) | 183.3 ± 11.4 |
| HDL-C (mg/dL) | 38.0 ± 8.1 | HDL-C (mg/dL) | 36.2 ± 8.5 |
| Glucose (mg/dL) | 110.3 ± 9.9 | Glucose (mg/dL) | 108.2 ± 8.4 |
| Triglycerides (mg/dL) | 95.1 ± 8.2 | Triglycerides (mg/dL) | 97.0 ± 9.3 |
| Values are the mean ± SD. | | | |

There was no significant change in plasma levels of TC, LDL-C and HDL-C in subjects in the placebo groups at the end of the administration period (Table 2).

| **Table 2.** Placebo effects on plasma levels of cholesterol, glucose and triglycerides. | | | | | | | |
|---|---|---|---|---|---|---|---|
| | | **Placebo *LioMel*** n = 20 | *Δ* (*%*) | | | **Placebo *BioTechMel*** n = 20 | *Δ* (*%*) |
| **TC (mg/dL)** | *t 0* | 236.9 ± 13.1 | | **TC (mg/dL)** | *t 0* | 235.6 ± 13.9 | |
| | *t 60* | 224.8 ± 12.2 | -5.1 | | *t 60* | 225.9 ± 12.1 | -4.1 |
| **LDL-C (mg/dL)** | *t 0* | 185.3 ± 11.4 | | **LDL-C (mg/dL)** | *t 0* | 183.3 ± 12.1 | |
| | *t 60* | 176.3 ± 11.9 | -4.9 | | *t 60* | 176.3 ± 11.3 | -3.8 |
| **HDL-C (mg/dL)** | *t 0* | 37.8 ± 8.5 | | **HDL-C (mg/dL)** | *t 0* | 39.0 ± 8.0 | |
| | *t 60* | 39.0 ± 6.9 | *+3.1* | | *t 60* | 40.0 ± 7.2 | +2.6 |
| **Glucose (mg/dL)** | *t 0* | 107.2 ± 8.4 | | **Glucose (mg/dL)** | *t 0* | 110.3 ± 9.5 | |
| | *t 60* | 112.4 ± 9.1 | +4.9 | | *t 60* | 116.2 ± 11.0 | +5.4 |
| **Triglycerid es (mg/dL)** | *t 0* | 98.0 ± 9.3 | | **Triglycerid es (mg/dL)** | *t 0* | 96.5 ± 7.4 | |
| | *t 60* | 103.1 ± 10.1 | +5.2 | | *t 60* | 102.2 ± 8.9 | +6.1 |
| Patients took 2 placebo tablets/day for 60 days. Values are the mean ± SD. The results are significantly different for P = 0.001. | | | | | | | |

Analysing the LioMel and BioTechMel treatment groups (Table 3), the results are very promising, as both treatments were able to decrease mean TC and LDL-C values, while promoting an increase in mean HDL-C levels. Remarkably, BioTechMel demonstrated significantly greater effects than LioMel, promoting a further decrease in TC and LDL-C levels, and a further increase in HDL-C levels.

| **Table 3.** Effects of *LioMel* and *BioTechMel* on plasma levels of cholesterol, glucose and triglycerides. | | | | | | | |
|---|---|---|---|---|---|---|---|
| | | ***LioMel*** | *Δ* (%) | | | ***Bio TechMel*** | *Δ* (%) |
| **TC** | *t 0* | 233.6 ± 13.7 | | **TC** | *t 0* | 234.9 ± 13.1 | |
| **(mg/dL)** | *t 60* | 175.4 ± 13.6 | -24.9 | **(mg/dL)** | *t 60* | 130.0 ± 11.6 | -44.8 |
| **LDL-C** | *t 0* | 181.3 ± 12.3 | | **LDL-C** | *t 0* | 183.3 ± 11.4 | |
| **(mg/dL)** | *t 60* | 113.4 ± 11.6 | *-37.5* | **(mg/dL)** | *t 60* | 95.5 ± 9.6 | -47.9 |
| **HDL-C** | *t 0* | 38.0 ± 8.1 | | **HDL-C** | *t 0* | 36.2 ± 8.5 | |
| **(mg/dL)** | *t 60* | 56.8 ± 7.0 | +49.2 | **(mg/dL)** | *t 60* | 56.0 ± 6.8 | +54.8 |
| **Glucose** | *t 0* | 110.3 ± 9.9 | | **Glucose** | *t 0* | 110.3 ± 9.2 | |
| **(mg/dL)** | *t 60* | 110.8 ± 11.1 | *+0.4* | **(mg/dL)** | *t 60* | 110.7 ± 11.1 | *+0.5* |
| **Triglycerid** | *t 0* | 95.1 ± 14.2 | | **Triglycerid** | *t 0* | 97.0 ± 9.3 | |
| **es (mg/dL)** | *t 60* | 95.9 ± 13.3 | *+0.8* | **es (mg/dL)** | *t 60* | 97.8 ± 9.1 | +0.7 |
| Patients took 2 treatment tablets/day for 60 days. | | | | | | | |
| Values are the mean ± SD. | | | | | | | |
| The results are significantly different for P = 0.001. | | | | | | | |

The results obtained indicate the possibility of an innovative treatment of plant matrices, preferably based on freeze-dried apple, specifically of the Annurca Campana PGI variety, for the production of raw materials, suitable for the formulation of food supplements, based on polyphenols with high intestinal bioavailability, useful for exerting antioxidant, anti-inflammatory and lipid-lowering effects at systemic level.

## Claims

1. A process for increasing the bioavailability of polyphenols of a plant food matrix rich in polyphenols, said plant matrix in a freeze-dried form (Lio), said process comprising:
contacting the freeze-dried product (Lio) with distilled water at pH 2.5-4.0 and incubating for 0.5-3 hours at 20-30 °C under stirring;
adding a mixture of enzymes comprising one or more enzymes selected from the group consisting of Pectinliasis (PL), Pectinesterase (PE), Polygalacturonase (PG), Cellulase (CMC) and incubating for 0.5-3 hours at 20-30 °C under stirring;
freeze-drying the incubated aqueous mixture to obtain a freeze-dried product (BioTech) **characterized by** increased bioavailability of the polyphenols contained therein.

2. The process according to claim 1 in which the plant matrix is consisting of PGIannurca campana apple (*Malus pumila Miller*).

3. The process according to claim 1 or 2 in which distilled water at pH 2.5-4.0 is an acid solution for acetic acid.

4. The process according to any one of claims 1-3 wherein the enzymatic mixture consists of Pectinliasis (PL), 10000-50000 U/g, Pectinesterase (PE), 500-4000 U/g, Polygalacturonase (PG), 3000-7000 U g, Cellulase (CMC), 200-600 U/g.

5. A freeze-dried product (BioTech) obtained according to the process of any one of claims 1-4 in which the bioavailability of the polyphenols is increased with respect to the bioavailability of the starting freeze-dried product (Lio).

6. The freeze-dried product (BioTechMel) according to claim 5 obtained starting from the plant matrix consisting of PGI annurca apple (LioMel) according to claim 2 in which the bioavailability of the polyphenols is increased about 4 times compared to the starting freeze-dried product (LioMel).

7. A gastro-resistant food/nutraceutical composition comprising the freeze-dried product (BioTech) according to any one of claims 5-6 and other food/nutraceutical acceptable ingredients.

8. The composition according to claim 7 in the form of capsules or tablets.

9. The freeze-dried product (BioTech) according to any of the claims 5-6 or the composition according to any of the claims 7-8 for use as an antioxidant and/or anti-inflammatory and/or lipid-lowering agent.
